(19) Europäisches Patentamt
European Patent Office
Office européen des brevets

(11) **EP 3 734 326 A1**

(12) **EUROPEAN PATENT APPLICATION**
published in accordance with Art. 153(4) EPC

(43) Date of publication:
**04.11.2020 Bulletin 2020/45**

(51) Int Cl.:
*G01S 13/24* [(2006.01)]   *G01S 7/292* [(2006.01)]

(21) Application number: **19767052.4**

(22) Date of filing: **28.02.2019**

(86) International application number:
**PCT/JP2019/007969**

(87) International publication number:
**WO 2019/176573 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.03.2018   JP 2018044825**

(71) Applicants:
• **FURUKAWA ELECTRIC CO., LTD.**
**Chiyoda-ku**
**Tokyo 100-8322 (JP)**
• **Furukawa Automotive Systems Inc.**
**Inukami-gun, Shiga 522-0242 (JP)**

(72) Inventors:
• **KOBAYASHI, Hiroyuki**
**Tokyo 100-8322 (JP)**
• **KAGIMOTO, Taishi**
**Tokyo 100-8322 (JP)**
• **WAKABISHI, Tadataka**
**Tokyo 100-8322 (JP)**
• **MATSUSHIMA, Sadao**
**Tokyo 100-8322 (JP)**
• **NAMIKI, Hajime**
**Tokyo 100-8322 (JP)**
• **MIURA, Jun**
**Tokyo 100-8322 (JP)**
• **KAWAMURA, Tomoki**
**Tokyo 100-8322 (JP)**
• **SHOJI, Noriyuki**
**Tokyo 100-8322 (JP)**

(74) Representative: **Winter, Brandl, Fürniss, Hübner, Röss, Kaiser, Polte - Partnerschaft mbB Patent- und Rechtsanwaltskanzlei Alois-Steinecker-Straße 22 85354 Freising (DE)**

(54) **RADAR DEVICE AND OBJECT DETECTION METHOD OF RADAR DEVICE**

(57)    To detect an object present in the vicinity. This radar device 10, which detects an object, has: an output circuit (frequency comb generation unit 13) which outputs a signal having a plurality of synchronized frequency components; a generation circuit (multiplication unit 14) which generates a local oscillation signal on the basis of a signal output from the output circuit; a transmission circuit (mixer 15) which generates a transmission signal on the basis of the local oscillation signal and transmits the transmission signal through a transmission antenna 18; a receiving circuit (selection unit 20) which receives the transmission signal reflected by the object through reception antennas 19-1 to 19-4 and outputs the received signal as a reception signal; a detection circuit (reception signal processing unit 29) which executes a process for detecting the object on the basis of the phases of the plurality of frequency components included in the reception signal; and a supplying circuit (reception signal processing unit 29) which supplies, to the outside, information on the object detected by the detection circuit.

FIG. 1

**Description**

TECHNICAL FIELD

The present invention relates to a radar device and an object detection method of a radar device.

BACKGROUND ART

Patent Document 1 discloses a technology relating to a radar apparatus in which an intensity modulation unit is disposed between a voltage control oscillation unit (VCO) and a transmission antenna, a carrier wave is modulated by the intensity modulation unit to generate a pulse signal, and an object is detected by the pulse signal.
Patent Document 1: Japanese Unexamined Patent Application, Publication No. 2015-40765

DISCLOSURE OF THE INVENTION

Problems to be Solved by the Invention

However, in the technology disclosed in Patent Document 1, an inflow signal when a transmission signal output from the transmission antenna is directly received to a reception antenna or an unnecessary signal component such as a signal reflected from a bumper or the like when mounted on a vehicle exist, and in a case where the unnecessary signal exists, it is difficult to distinguish a reflected wave from an object existing in the vicinity of the radar apparatus and the unnecessary signal, and thus there is a problem that it is difficult to detect the object existing in the vicinity.
An object of the invention is to provide a radar device and an object detection method of the radar device which are capable of detecting an object existing in the vicinity. Means for Solving the Problems
To accomplish the above-described object, according to the invention, there is provided a radar device that detects an object. The radar device includes: an output circuit that outputs a signal having a plurality of synchronized frequency components; a generation circuit that generates a local oscillation signal on the basis of the signal output from the output circuit; a transmission circuit that generates a transmission signal on the basis of the local oscillation signal and transmits the transmission signal through a transmission antenna; a receiving circuit that receives the transmission signal reflected from the object through a reception antenna, and outputs the signal as a reception signal; a detection circuit that executes processing of detecting the object on the basis of a phase of a plurality of frequency components included in the reception signal; and a supplying circuit that supplies information on the object which is detected by the detection circuit to the outside. According to the configuration, it is possible to detect an object existing in the vicinity of the radar device.
In addition, in the invention, the transmission circuit may generate the transmission signal by superimposing the same modulation signal on each of the plurality of frequency components included in the local oscillation signal. According to the configuration, it is possible to easily generate a transmission signal having a desired waveform.
In addition, in the invention, in the signal that is output from the output circuit and includes the plurality of frequency components, the frequency components are arranged in a comb shape with constant intervals, the generation circuit generates the local oscillation signal by multiplying or frequency-dividing the signal in which the frequency components are arranged in the comb shape, the transmission circuit generates the transmission signal by up-converting the same baseband signal with the local oscillation signal, the receiving circuit generates the reception signal by down-converting the reception signal with the local oscillation signal, and the detection circuit detects the object on the basis of a plurality of frequency components included in the down-converted signal. According to the configuration, it is possible to detect an object existing in the vicinity of the radar device with a simple configuration.
In addition, in the invention, the detection circuit emphasizes or attenuates the object existing in a predetermined distance on the basis of the down-converted signal. According to the configuration, since the object is emphasized or attenuated, it is possible to reliably detect a desired object.
In addition, in the invention, the reception signal includes signals reflected from a plurality of the objects, and the detection circuit detects a phase component that is included in the down-converted signal and corresponds to an object in a predetermined distance among the plurality of objects, and subtracts the detected phase component to attenuate a signal of the object in the predetermined distance. According to the configuration, it is possible to attenuate an unnecessary object signal.
In addition, in the invention, the detection circuit detects an in-phase component included in the down-converted signal, and subtracts the detected in-phase component to attenuate an inflow signal that is directly input to the reception antenna from the transmission antenna so as to detect the object. According to the configuration, since the inflow signal is removed, it is possible to reliably detect an object existing in the vicinity.
In addition, in the invention, the transmission circuit generates the transmission signal by modulating the local oscillation signal by amplitude modulation, phase modulation, or a combination of the amplitude modulation and the phase modulation. According to the configuration, it is possible to select an optimal modulation method corresponding to a use.

In addition, in the invention, the output circuit generates a signal having a plurality of synchronized frequency components on the basis of a signal in which a predetermined waveform repeats in a predetermined period. According to the configuration, it is possible to generate a signal having a plurality of frequency components with a simple configuration.

In addition, in the invention, the radar device is mounted on a vehicle, and a travel state of the vehicle is controlled on the basis of information on the object which is supplied from the supplying circuit. According to the configuration, it is possible to appropriately control the vehicle on the basis of an object existing in the vicinity of the vehicle.

In addition, according to the invention, there is provided an object detection method of a radar device that detects an object. The object detection method includes: outputting a signal having a plurality of synchronized frequency components; generating a local oscillation signal on the basis of the output signal; generating a transmission signal on the basis of the local oscillation signal and transmitting the transmission signal through a transmission antenna; receiving the transmission signal reflected from the object through a reception antenna, and outputting the signal as a reception signal; executing processing of detecting the object on the basis of a phase of a plurality of frequency components included in the reception signal; and supplying information on the object which is detected to the outside. According to the method, it is possible to detect an object existing in the vicinity of the radar device.

Effects of the Invention

According to the invention, it is possible to provide a radar device and an object detection method of the radar device which are capable of detecting an object existing in the vicinity.

BRIEF DESCRIPTION OF THE DRAWINGS

Fig. 1 is a diagram illustrating a configuration example of a radar device according to a first embodiment of the invention.
Fig. 2 is a diagram illustrating a detailed configuration example of a frequency comb generation unit illustrated in Fig. 1.
Fig. 3 is a diagram illustrating another detailed configuration example of the frequency comb generation unit illustrated in Fig. 1.
Fig. 4 is a graph illustrating a frequency characteristic of a local oscillation signal output from a multiplication unit illustrated in Fig. 1.
Fig. 5 is a graph illustrating a frequency characteristic of a transmission signal output from an amplification unit illustrated in Fig. 1.
Fig. 6 is a graph illustrating a frequency characteristic of a signal that is down-converted by a mixer illustrated in Fig. 1.
Fig. 7 is a diagram illustrating an operation of detecting an object existing in the vicinity of the radar device.
Fig. 8 is a diagram illustrating an operation in the case of detecting an object by using a signal of a different wavelength.
Fig. 9 is a diagram illustrating a configuration example of a radar device according to a second embodiment of the invention.
Fig. 10 is a diagram illustrating a configuration example of a radar device according to a third embodiment of the invention.
Fig. 11 is a diagram illustrating a configuration example of a radar device according to a fourth embodiment of the invention.
Fig. 12 is a diagram illustrating a configuration example of a radar device according to a fifth embodiment of the invention.

PREFERRED MODE FOR CARRYING OUT THE INVENTION

Hereinafter, embodiments of the invention will be described.

(A) Description of Configuration of First Embodiment of Invention

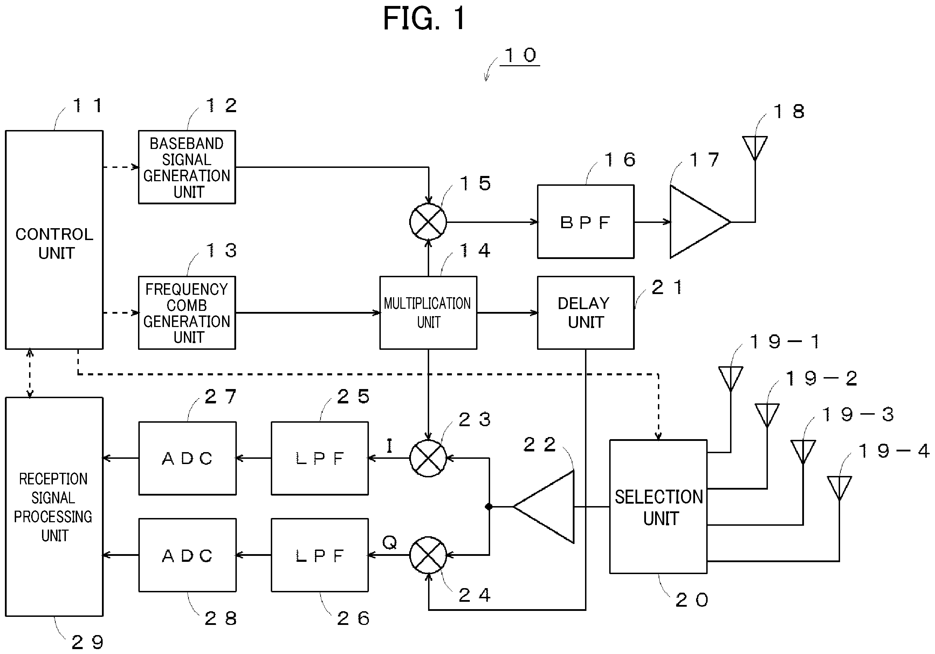

Fig. 1 is a diagram illustrating a configuration example of a radar device according to a first embodiment of the invention. As illustrated in the drawing, for example, a radar device 10 according to the first embodiment of the invention is mounted on a vehicle such as an automobile, and detects an object such as another vehicle, a pedestrian, and an obstacle which exist in the vicinity of the vehicle.

Here, the radar device 10 includes a control unit 11, a baseband signal generation unit 12, a frequency comb generation unit 13, a multiplication unit 14, a mixer 15, a band pass filter (BPF) 16, an amplification unit 17, a transmission antenna 18, reception antennas 19-1 to 19-4, a selection unit 20, an amplification unit 22, mixers 23 and 24, low pass filters (LPF) 25 and 26, analog to digital converters (ADC) 27 and 28, and a reception signal processing unit 29.

Here, the control unit 11 controls the baseband signal generation unit 12, the frequency comb generation unit 13, the selection unit 20, the reception signal processing unit 29, and other portions. Note that, in Fig. 1, a broken line indicates a signal line for transmitting a control signal.

The baseband signal generation unit 12 generates a baseband signal, and supplies the baseband signal to the mixer 15. The frequency comb generation unit 13 generates a comb signal in which a plurality of frequency components is arranged in a comb shape in a frequency axis shape, and supplies the comb signal to the multiplication unit 14.

The multiplication unit 14 multiplies the comb signal supplied from the frequency comb generation unit 13, and supplies the comb signal to the mixer 15, a delay unit 21, and the mixer 23 as a local oscillation signal. The mixer 15 up-converts the baseband signal supplied from the baseband signal generation unit 12 with the local oscillation signal supplied from the multiplication unit 14, and outputs the resultant signal.

The BPF 16 allows a component in a predetermined band which is included in the signal output from the mixer 15 to pass therethrough, attenuates the other components, and outputs the components as radio frequency (RF) signals. The amplification unit 17 amplifies the RF signal output from the BPF 16 with a predetermined gain, and outputs the resultant signal as a transmission signal. The transmission antenna 18 transmits the transmission signal output from the amplification unit 17 as an electromagnetic wave.

The reception antennas 19-1 to 19-4 receive an electromagnetic wave that is transmitted from the transmission antenna 18 and is reflected from an object, converts the electromagnetic wave into an electric signal, and outputs the electric signal. The selection unit 20 selects any one of the reception antennas 19-1 to 19-4 in correspondence with control of the control unit 11, and connects the selected antenna to the amplification unit 22.

The delay unit 21 delays a phase of the local oscillation signal output from the multiplication unit 14 by $\pi/2$, and outputs the resultant signal. The amplification unit 22 amplifies a reception signal output from the selection unit 20 with a predetermined gain, and outputs the resultant signal.

The mixer 23 down-converts the signal output from the amplification unit 22 with the local oscillation signal output from the multiplication unit 14, and outputs the resultant signal as an intermediate frequency (IF) signal. The mixer 24 down-converts the signal output from the amplification unit 22 with the local oscillation signal output from the delay unit 21, and outputs the resultant signal as an IF signal.

The LPF 25 attenuates a harmonic component from the IF signal output from the mixer 23, and outputs the resultant signal. The LPF 26 attenuates a harmonic component from the IF signal output from the mixer 24, and outputs the resultant signal.

The ADC 27 converts an analog signal output from the LPF 25 into a digital signal, and supplies the digital signal to the reception signal processing unit 29. The ADC 28 converts an analog signal output from the LPF 26 into a digital signal, and supplies the digital signal to the reception signal processing unit 29.

The reception signal processing unit 29 inputs digitized reception signals supplied from the ADCs 27 and 28, executes presume processing, fast fourier transform (FFT) processing, clustering processing, tracking processing, and the like to detect an object, and supplies a detected result to a high layer electric control unit (ECU) (not illustrated), or the like.

Note that, for example, the reception signal processing unit 29 is constituted by a central processing unit (CPU), a read only memory (ROM), a random access memory (RAM), a communication unit, an interface (I/F), and the like, and the CPU may read out and execute an executable command group stored in the ROM to realize processing to be described later. Note that, distribution processing may be executed by a plurality of the CPUs. In addition, the reception signal processing unit 29 may be constituted by a digital signal processor (DSP), a field programmable gate array (FPGA), an application specific integrated circuit (ASIC), or the like instead of the CPU.

(B) Description of Operation of First Embodiment of Invention

Next, an operation of the first embodiment of the invention will be described. Hereinafter, a detailed operation will be described after description of an operation principle of the first embodiment of the invention.

When an operation of the radar device 10 is initiated, the control unit 11 controls the baseband signal generation unit 12 to start to generate a baseband signal, and controls the frequency comb generation unit 13 to start to generate a comb signal.

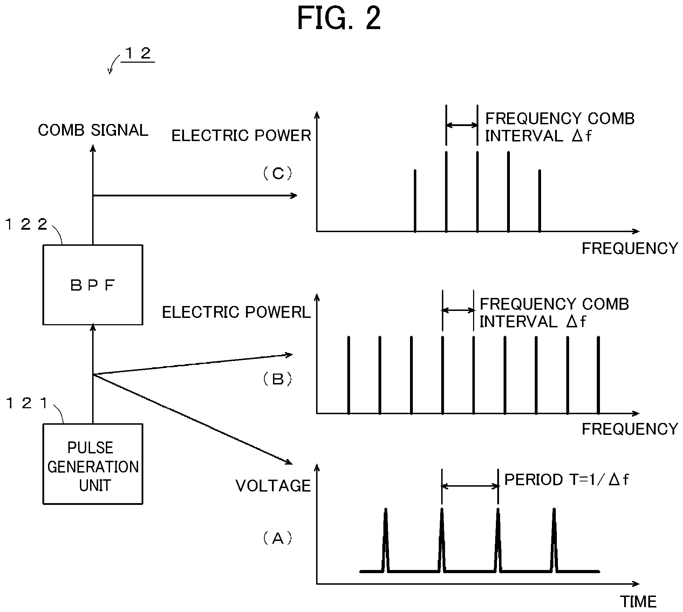

Fig. 2 is a diagram illustrating a configuration example of the frequency comb generation unit 13 illustrated in Fig. 1. In Fig. 2, the frequency comb generation unit 13 includes a pulse generation unit 121 and a BPF 122. As illustrated in Fig. 2(A), the pulse generation unit 121 generates an impulse-shaped pulse signal having a period of $T = 1/\Delta f$ and

outputs the pulse signal. When the pulse signal is converted into a frequency domain, a signal scattered in a comb-tooth shape is obtained as illustrated in Fig. 2(B). Note that, a comb interval of the frequency is ∆f, and this is a reciprocal of a period of the pulse signal illustrated in Fig. 2(A).

Among signals supplied from the pulse generation unit 121, the BPF 122 allows a signal having a predetermined bandwidth to pass therethrough, attenuates the other signals, and outputs the resultant signals. As a result, as illustrated in Fig. 2(C), a signal having a predetermined bandwidth is outputs as a comb signal.

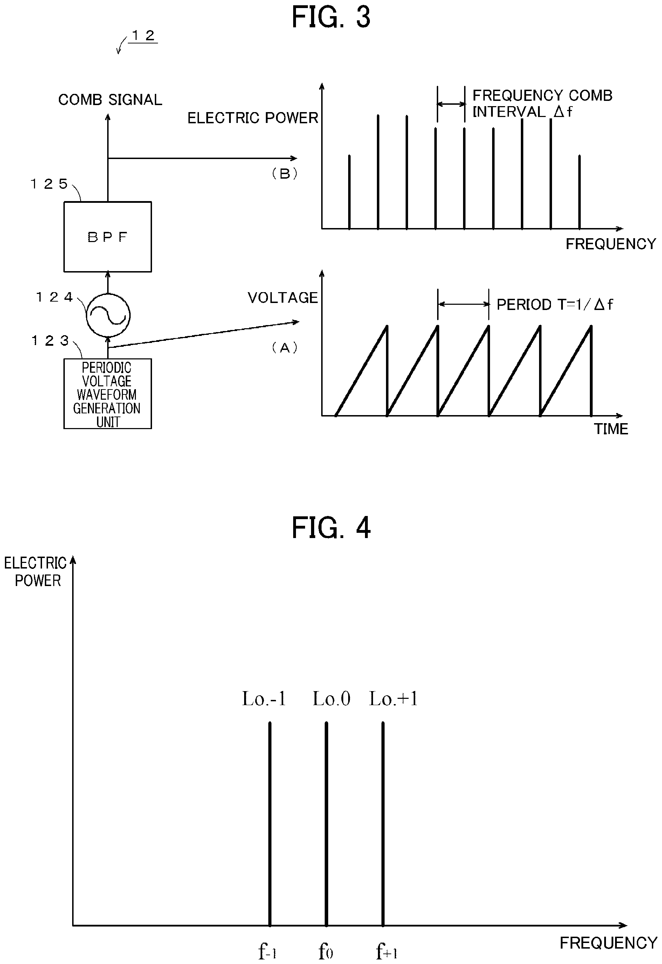

Fig. 3 is a diagram illustrating another configuration example of the frequency comb generation unit 13 illustrated in Fig. 1. In Fig. 3, the frequency comb generation unit 13 includes a periodic voltage waveform generation unit 123, a voltage controlled oscillator (VCO) 124, and a BPF 125. As illustrated in Fig. 3(A), the periodic voltage waveform generation unit 123 generates a periodic voltage waveform of a period T = 1/∆f, and outputs the waveform. For example, the waveform may be a periodic waveform such as a sinusoidal wave, a sawtooth wave, a triangular wave, a square wave, and a stepped waveform. The VCO 124 changes an oscillation frequency in correspondence with an output voltage of the periodic voltage waveform generation unit 123, and outputs the resultant frequency to the BPF 125. Among signals supplied from the VCO 124, the BPF 125 allows a signal having a predetermined bandwidth to pass therethrough, attenuates the other signals, and outputs the resultant signals. As a result, a signal as illustrated in Fig. 3(B) is output as a comb signal.

The multiplication unit 14 multiplies signals output from the frequency comb generation unit 13, and outputs the resultant signals as a local oscillation signal. Fig. 4 is a graph illustrating an example of the local oscillation signal output from the multiplication unit 14. Note that, in Fig. 4, it is assumed that the local oscillation signal is composed of three waves for simplification of explanation. However, the invention is not limited to the case of the three waves.

A local oscillation signal illustrated in Fig. 4 has a central frequency f0, a frequency f+1 higher than the central frequency, and a frequency f-1 lower than the central frequency. Note that, a signal of f0 is referred to as "Lo.0", a signal of f+1 is referred to as "Lo.+1", and a signal of f-1 is referred to as "Lo.-1".

The mixer 15 up-converts the baseband signal output from the baseband signal generation unit 12 with the local oscillation signal that is supplied from the multiplication unit 14 and is illustrated in Fig. 4, and outputs the resultant signal. The BPF 16 allows a predetermined frequency band of a signal supplied form the mixer 15 to pass therethrough, attenuates the other unnecessary components, and outputs the resultant signal as an RF signal.

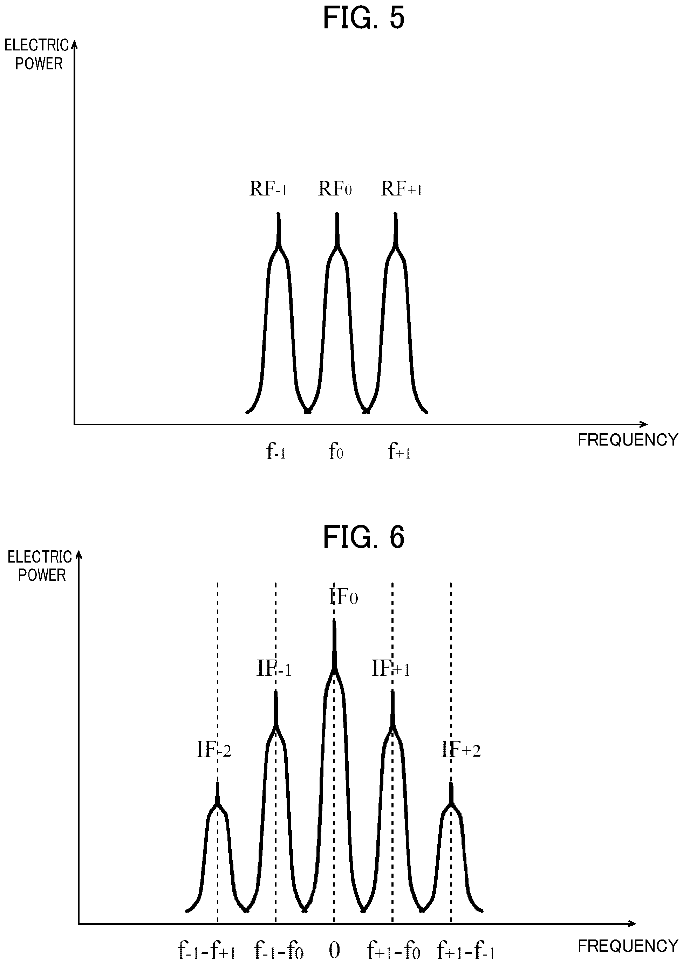

Fig. 5 is a graph illustrating a frequency characteristic of the transmission signal output from the amplification unit 17. In the example illustrated in Fig. 5, the transmission signal includes a signal of three waves including f-1, f0, and f+1. The transmission signal is amplified with a predetermined gain by the amplification unit 17, and is transmitted from the transmission antenna 18 as an electromagnetic wave. The electromagnetic wave transmitted from the transmission antenna 18 is reflected from an object, is received by the reception antennas 19-1 to 19-4, and is supplied to the selection unit 20 as a reception signal.

A connection state of the selection unit 20 is controlled by the control unit 11. For example, whenever the transmission signal is transmitted, the reception antennas 19-1 to 19-4 are sequentially selected by the selection unit 20, and the reception signal is supplied to the amplification unit 22.

The amplification unit 22 amplifies the reception signal supplied from the selection unit 20 with a predetermined gain, and supplies the resultant signal to the mixers 23 and 24. The mixer 23 down-converts the reception signal supplied from the amplification unit 22 with the local oscillation signal supplied from the multiplication unit 14, and outputs the resultant signal. The mixer 24 down-converts the reception signal supplied from the amplification unit 22 with the local oscillation signal of which a phase is delayed by π/2 by the delay unit 21, and outputs the resultant signal. Note that, the mixers 23 and 24 quadrature-demodulates the reception signal output from the amplification unit 22, and outputs the resultant signal as an IQ component.

Fig. 6 illustrates an example of the signal output from the mixers 23 and 24. In this example, a signal of which a frequency includes five waves of f-1-f+1, f-1-f0, 0, f+1-f0, and f+1-f-1 is illustrated differently from the frequency of the transmission signal in Fig. 5. More specifically, respective components illustrated in Fig. 6 are expressed by (1) to (5) to be described below.

> (1) IF-2 is a component obtained by down-converting RF-1 with Lo.+1
> (2) IF+2 is a component obtained by down-converting RF+1 with Lo.-1
> (3) IF0 is a combined component of components obtained by down-converting RFx with Lo.x (x: -1, 0, and +1)
> (4) IF-1 is a combined component of components obtained by down-converting RFx with Lo.x+1 (x: -1 and 0)
> (5) IF+1 is a combined component of components obtained by down-converting RFx with Lo.x-1 (x: 0 and +1)

Signal output from the mixers 23 and 24 are supplied to the ADCs 27 and 28 after an unnecessary high-frequency component is attenuated by the LPFs 25 and 26. The ADCs 27 and 28 convert analog signals supplied from the LPFs 25 and 26 into digital signals, and supply the digital signals to the reception signal processing unit 29. The reception signal processing unit 29 performs presume processing, FFT processing, clustering processing, and tracking processing with respect to the digital signals supplied from the ADCs 27 and 29 to detect an object.

However, in a case where a plurality of objects exist to be adjacent to each other, it may be difficult for the radar device 10 to discriminate the plurality of objects. For example, in a case where a distance gate is set as DG, and a frequency number of each comb is set as FCN, for example, an IQ component of a reception signal by the reception antenna 19-1 is set as follows.

I (DG, FCN)

Q (DG, FCN)

For example, one distance gate is set to 15 [cm] corresponding to a radio wave round-trip time of 1 [nsec], a distance corresponding to the distance gate DG is D [m] = 0.15·DG. In addition, in a case where the number of combs is N+1, FCN is an integer of $N/2 \leq FCN \leq N/2$, and a frequency of each comb is fFCN [GHz] = f0 + $\Delta$f·(FCN).

Note that, IQ data of the distance gate DG by quadrature demodulation represents data at which a pulse is measured at timing corresponding to round-trip time of a distance D = 0.15·DG. For example, when a pulse width is 10 [nsec], information on a distance width of 10 distance gates (approximately 1.5 m) is mixed as IQ data of the same distance gate.

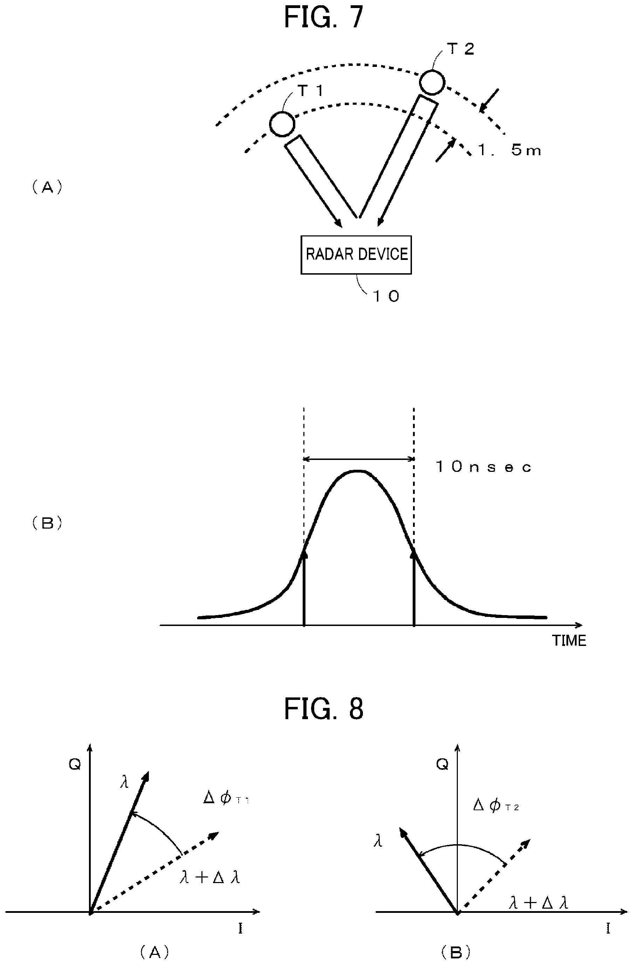

Specifically, as illustrated in Fig. 7(A), a case where objects T1 and T2 are located within a detection range of the radar device 10 with a distance of 1.5 m may be considered. In this case, as described above, in a case where the pulse width is 10 [nsec] = 10 distance gates (approximately 1.5 m), reflected waves enter a pulse width of a pulse signal indicated by a solid-line curve in Fig. 7(B), and thus the reflected waves are combined, and a combined reflected wave cannot be discriminated in a time domain.

However, in a case where frequency numbers FCN are different from each other, that is, in a case where a wavelength (frequency) of the transmission signal is changed, a phase of a reception signal varies in correspondence with a distance up to an object, and thus it is possible to discriminate objects with reference to the phase variation. In the example in Fig. 7(A), for example, when objects T1 and T2 are detected by using a transmission signal having a wavelength of $\lambda+\Delta\lambda$, and are displayed on an IQ plane, arrows indicated by broken lines in Fig. 8(A) and Fig. 8(B) are obtained.

In this case, when objects T1 and T2 are detected by using a transmission signal having a wavelength of $\lambda$, and are displayed on an IQ plane, arrows indicated by solid lines in Fig. 8(A) and Fig. 8(B) are obtained. At this time, in Fig. 8(A), a phase difference between the broken line and the solid line is $\Delta\phi$T1, and in Fig. 8(B), the phase difference between the broken line and the solid line is $\Delta\phi$T2, and a relationship of $\Delta\phi$T1 $\neq$ $\Delta\phi$T2 is established. Note that, $\Delta\phi$T1 and $\Delta\phi$T2 vary in correspondence with a distance between the radar device 10 and the objects T1 and T2 as described later.

As described above, as illustrated in Fig. 7(A), even in a case where the objects T1 and T2 exists with a distance less than resolution, when changing a frequency, it is possible to discriminate the objects on the basis of a phase difference on the IQ plane.

Next, an operation of the first embodiment will be described with focus given to the frequency domain. As described above, the signals IF0, and IF±1 output from the mixers 23 and 24 are signals generated as a result of combination of a plurality of RF components (refer to (3) to (5)). Here, components of RF0 and RF±1 can be separated from each other by using IF±2.

For example, IF-2 is result obtained by down-converting RF-1 with Lo.-1 and a frequency and a phase of Lo.-1 are also known, and thus RF-1 can be reproduced. In addition, IF-1 is a result obtained by combining a component obtained by down-converting RF-1 with Lo.0 and a component obtained by down-converting RF0 with Lo.+1. At this time, since respective frequency components of a local oscillation signal are generated by the frequency comb generation unit 13, Lo.-1 and Lo.0 are synchronized signals which are different only in a frequency. Accordingly, when IF-2 that is a result obtained by down-converting RF-1 with Lo.-1 is frequency-converted, it is possible to obtain a component obtained by down-converting RF-1 in IF-1 with Lo.0. Accordingly, RF0 can be obtained by subtracting a result of a frequency conversion of IF-2 from IF-1, and by performing frequency conversion. RF+1 can also be obtained from IF0 and IF+1 in processing similar to the processing of obtaining RF-1 and RF0.

Description will be given of an example of removing an inflow signal when a transmission signal output from the transmission antenna 18 is directly received by the reception antennas 19-1 to 19-4, for example, through a substrate by using RFx (x: -1, 0, and +1). For example, when wavelengths of RF0 and RF-1 are set as $\lambda 0+\Delta\lambda$ and $\lambda 0$, respectively, a phase variation expressed by the following Expression (1) occurs from a relationship of a round-trip distance (2L) up to an object and a difference ($\Delta\lambda$) in a wavelength.

[Mathematical 1]

$$\Delta\phi = 2\pi \cdot 2L\left(\frac{1}{\lambda_0 + \Delta\lambda} - \frac{1}{\lambda_0}\right) = 4\pi L\frac{\lambda_0 - (\lambda_0 + \Delta\lambda)}{(\lambda_0 + \Delta\lambda)\lambda_0}$$

$$\cong 4\pi L\frac{\Delta\lambda}{\lambda_0{}^2}$$

$$\cdots (1)$$

At this time, in Expression (1), an inflow signal when the transmission signal output from the transmission antenna 18 is directly received by the reception antennas 19-1 to 19-4 corresponds to L = 0, and thus $\Delta\phi$ is also zero. In addition, even in a relationship between RF0 and RF+1, similarly, a phase difference occurs in an object located at a distance L, but the inflow signal has the in-phase with no phase difference. By using this situation, when RFx (x: -1, 0, and +1) are frequency-converted to the same frequency (for example, 0 Hz), and the frequencies are averaged on the IQ plane, components of objects located at the distance L for which a phase difference occurred in accordance with a wavelength cancel each other, and are weakened, but in-phase components remain as is, and thus it is possible to extract only an inflow signal component.

When the speed of light is set as C, and a frequency bandwidth of the radar device 10 is set as BW, the inflow signal component occurs in a range corresponding to a pulse width that is approximately the distance D = C/(2×BW), and a signal from an object closer than the pulse width is buried in the inflow signal, and thus detection of the signal is difficult in the related art. However, according to the first embodiment, inflow signal components can be subtracted from the reception signal, and thus it is possible to solve the problem that a reflected signal from an object existing in the vicinity of the radar device 10 is buried in the inflow signal, and detection of the reflected signal is difficult.

In addition, a frequency bandwidth of a signal that is down-converted with a reception system becomes wider than a bandwidth of a transmission signal. According to this, detection of a peak position of an object becomes easy.

The reception signal processing unit 29 obtains in-phase components of RFx (x: -1, 0, and +1) from digitized IQ signals supplied from the ADCs 27 and 28, and removes the in-phase components through subtraction or the like, and thus inflow signal component can be attenuated.

According to the first embodiment of the invention, the inflow signal component is removed through the above-described processing, and thus detection of an object existing in the vicinity of the radar device 10 becomes easy. In addition, since a frequency bandwidth of a down-converted signal becomes wider than a bandwidth of a transmission signal, and thus detection of a peak position of an object becomes easy.

In addition, in the above-described example, in-phase components are extracted because a focus is given to the inflow signal of L = 0. However, when performing the same processing by subtracting a phase difference corresponding to Expression (1) in an object in an arbitrary distance, it is possible to emphasize or attenuate the object in the arbitrary distance, and thus according to the first embodiment of the invention, it is possible to detect an object located closely within a distance less than resolution of the radar device 10 as illustrated in Fig. 7(A). More specifically, in a case where two object exist, when a distance thereof is set as D, the speed of light is set as C, and a frequency bandwidth of the radar device 10 is set as BW, in the related art, only an object isolated by the distance D satisfying a relationship of D > C/(2×BW) can be detected. However, according to the first embodiment, it is also possible to detect an object that does not satisfy the condition.

(C) Description of Configuration of Second Embodiment of Invention

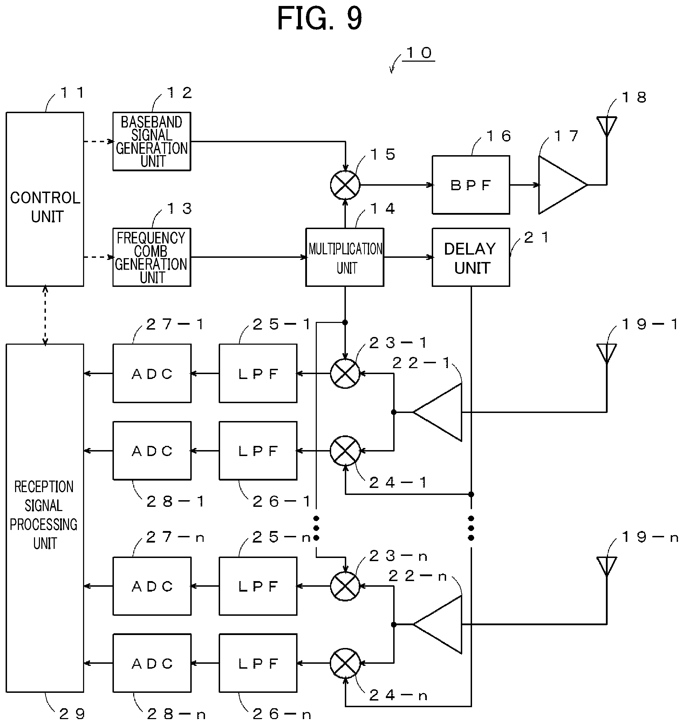

Next, a second embodiment of the invention will be described. Fig. 9 is a diagram illustrating a configuration example of the second embodiment of the invention. Note that, in Fig. 9, the same reference numeral will be given to a portion corresponding to Fig. 1, and description thereof will be omitted. In Fig. 9, when being compared with Fig. 1, the selection unit 20 is excluded, and the reception antennas 19-1 to 19-4 are changed to n (n > 1) systems of reception antennas 19-1 to 19-n, and the amplification unit 22, the mixers 23 and 24, the LPFs 25 and 26, and the ADCs 27 and 28 are changed to n systems. The other configurations are similar to the case of Fig. 1.

(D) Description of Operation of Second Embodiment of Invention

Next, an operation of the second embodiment of the invention will be described. In the second embodiment illustrated in Fig. 9, operations up to transmission of the transmission signal from the transmission antenna 18 as an electromagnetic wave are similar to Fig. 1.

In the second embodiment illustrated in Fig. 9, electromagnetic waves reflected from an object are received by reception antennas 19-1 to 19-n, are amplified by amplification units 22-1 to 22-n with a predetermined gain, and are supplied to mixers 23-1 to 23-n, and 24-1 to 24-n. The mixers 23-1 to 23-n, and 24-1 to 24-n down-convert reception signals supplied from the amplification units 22-1 to 22-n and quadrature-demodulates the reception signals, and outputs IQ signals obtained.

LPFs 25-1 to 25-n, and 26-1 to 26-n attenuates unnecessary harmonic components included in the signals output from the mixers 23-1 to 23-n, and 24-1 to 24-n, allow necessary components to pass therethrough, and supply the resultant signals to ADCs 27-1 to 27-n, and 28-1 to 28-n. The ADCs 28-1 to 28-n converts analog signals supplied from the LPFs 25-1 to 25-n, and 26-1 to 26-n into digital signals, and supplies the digital signals to the reception signal processing unit 29.

The reception signal processing unit 29 performs similar processing similar as in the above-described case with respect to the digital signals to remove inflow signal components, and thus detection of an object existing in the vicinity of the radar device 10 becomes easy. In addition, a frequency bandwidth of a signal that is down-converted becomes wider than a bandwidth of a transmission signal, and thus detection of a peak position of an object becomes easy. In addition, it is possible to detect an object located closely within a distance less than detection resolution.

(E) Description of Configuration of Third Embodiment of Invention

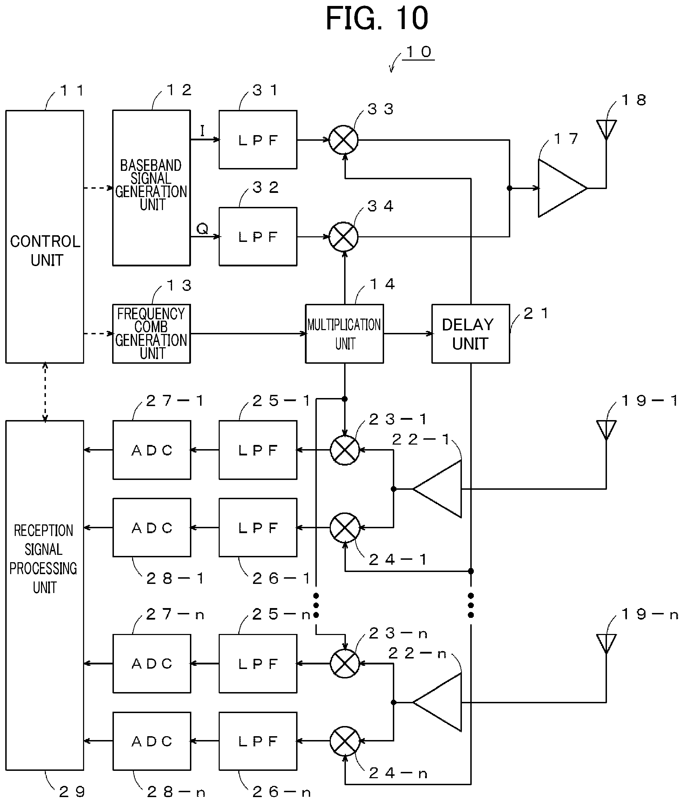

Next, a third embodiment of the invention will be described. Fig. 10 is a diagram illustrating a configuration example of a third embodiment of the invention. Note that, in Fig. 10, the same reference numeral will be given to a portion corresponding to Fig. 9, and description thereof will be omitted. In Fig. 10, when being compared with Fig. 9, the mixer 15 and the BPF 16 are excluded, and LPFs 31 and 32 and mixers 33 and 34 are newly added. The other configuration is the same as in Fig. 9.

(F) Description of Operation of Third Embodiment of Invention

In a third embodiment illustrated in Fig. 10, when being compared with the second embodiment illustrated in Fig. 9, a baseband signal is quadrature-modulated. In the second embodiment illustrated in Fig. 9, baseband signal components which are frequency-converted to a high band side and a low band side of a local oscillation signal frequency occur in a signal output from the mixer 15, and thus only one of the high band side and the low band side is used by the BPF 16, and the other is necessary to be attenuated. The unnecessary frequency components exist in the vicinity of the transmission signal, and thus it is necessary to use the BPF 16 having steep cutoff characteristics, but the BPF 16 having the steep characteristics is expensive and is large in size. However, in the third embodiment illustrated in Fig. 10, quadrature modulation is performed, and thus it is possible to output only component which are used, and thus the BPF 16 is not necessary. Note that, a basic operation of the third embodiment illustrated in Fig. 10 is similar to the operation in the second embodiment illustrated in Fig. 9, and thus description thereof will be omitted.

According to the third embodiment of the invention, the inflow signal is removed, and thus detection of an object existing in the vicinity of the radar device 10 becomes easy. In addition, a frequency bandwidth of a signal that is down-converted becomes wider than a bandwidth of a transmission signal, and thus detection of a peak position of an object becomes easy. In addition, it is possible to detect an object located closely within a distance less than detection resolution. In addition, since the BPF 16 is excluded, the manufacturing cost is reduced, and a circuit size can be reduced.

(G) Description of Configuration of Fourth Embodiment of Invention

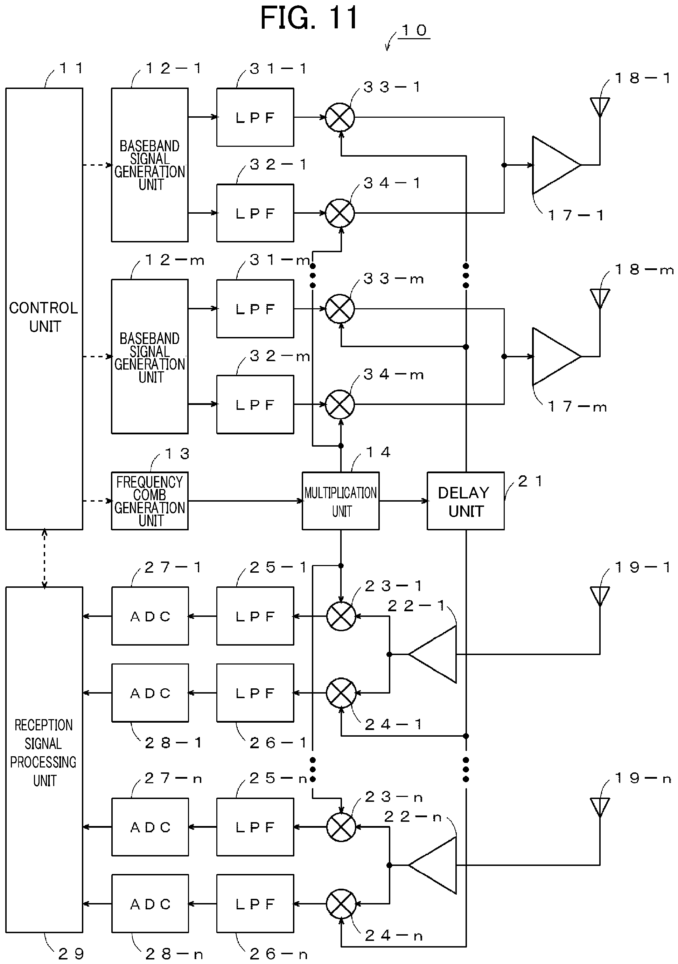

Next, a fourth embodiment of the invention will be described. Fig. 11 is a diagram illustrating a configuration example of the fourth embodiment of the invention. Note that, in Fig. 11, the same reference numeral will be given to a portion corresponding to Fig. 10, and description thereof will be omitted. In Fig. 11, when being compared with Fig. 10, the baseband signal generation unit 12, the LPFs 31 and 32, the mixers 33 and 34, the amplification unit 17, and the transmission antenna 18 are changed from one system to m (m > 1) systems. The other configurations are similar to Fig. 10. Note that, for example, transmission antennas 18-1 to 18-m and reception antennas 19-1 to 19-n are aligned in a horizontal direction.

(H) Description of Operation of Fourth Embodiment of Invention

In the fourth embodiment of the invention, m transmission systems and n reception systems are provided. According to this, a combination of the transmission and reception systems becomes m×n systems. When using the transmission and reception sequences of m×n systems, for example, it is possible to accurately detect an existing angle of an object in the horizontal direction. Note that, a basic operation of the fourth embodiment illustrated in Fig. 11 is similar to the operation in the second embodiment illustrated in Fig. 9, and thus description thereof will be omitted.

According to the fourth embodiment of the invention, it is possible to accurately detect the existing angle of the object in the horizontal direction, and inflow signal components are removed, and thus detection of the object existing in the vicinity of the radar device 10 becomes easy. In addition, a frequency bandwidth of a signal that is down-converted becomes wider than a bandwidth of a transmission signal, and thus detection of a peak position of an object becomes easy. In addition, it is possible to detect an object located closely within a distance less than detection resolution.

(I) Description of Configuration of Fifth Embodiment of Invention

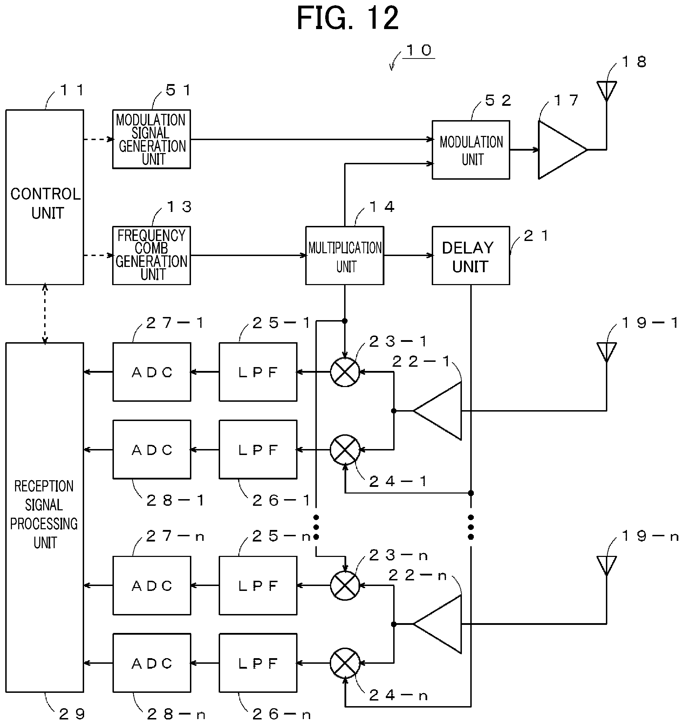

Next, a fifth embodiment of the invention will be described. Fig. 12 is a diagram illustrating a configuration example of the fifth embodiment of the invention. Note that, in Fig. 12, the same reference numeral will be given to a portion corresponding to Fig. 9, and description thereof will be omitted. In Fig. 12, when being compared with Fig. 9, the baseband signal generation unit 12, the mixer 15, and the BPF 16 are excluded, and a modulation signal generation unit 51 and a modulation unit 52 are newly added. The other configurations are similar to Fig. 9.

(J) Description of Operation of Fifth Embodiment of Invention

In the second embodiment illustrated in Fig. 9, the mixer 15 generates the transmission signal by up-converting the baseband signal supplied from the baseband signal generation unit 12 with the local oscillation signal supplied from the multiplication unit 14. On the other hand, in the fifth embodiment illustrated in Fig. 12, the local oscillation signal supplied from the multiplication unit 14 is modulated by a modulation signal supplied from the modulation signal generation unit 51 to generate a transmission signal. Note that, as a modulation method, for example, an amplitude modulation, phase modulation, or a combination thereof can be used. A transmission signal generated in this manner is similar to the second embodiment illustrated in Fig. 9.

According to the fifth embodiment of the invention, inflow signal components are removed, and thus detection of an object existing in the vicinity of the radar device 10 becomes easy. In addition, a frequency bandwidth of a signal that is down-converted becomes wider than a bandwidth of a transmission signal, and thus detection of a peak position of an object becomes easy. In addition, it is possible to detect an object located closely within a distance less than detection resolution.

(K) Description of Modification Example

The above-described embodiments are illustrative only, and it is not necessary to say that the invention is not limited to only the above-described cases. For example, in the above-described embodiments, for simplification of explanation, description has been given of the local oscillation signal that includes three waves as illustrated in Fig. 4, but the local oscillation signal may include two waves or four or more waves.

In addition, in the example illustrated in Fig. 4, the three waves of the local oscillation signal are arranged with equal intervals, but may be arranged with non-equal intervals. It is also true in a case where the local oscillation signal include four or more waves.

In addition, in the above-described embodiment, description has been given of an example in which the frequency of the local oscillation signal is fixed, but the frequency of the local oscillation signal may vary with the passage of time.

In addition, as a configuration example of the frequency comb generation unit 13, the configuration examples of Figs. 2 and 3 have been illustrated, but the other configuration can be employed. For example, a rectangular wave may be shaped instead of the triangular wave illustrated in Fig. 3.

In addition, in the above-described embodiment, description has been given of processing up to detection of an object, but the reception signal processing unit may supply information on the detected object to an external ECU (external processor), and the ECU may control a state of a vehicle on the basis of the information supplied. For example, objects located closely within a distance less than detection resolution can be discriminated, and thus when performing tracking processing with the objects set as individual objects, for example, it is possible to execute brake control or avoiding control as necessary.

EXPLANATION OF REFERENCE NUMERALS

| 10 | RADAR DEVICE |
|----|--------------|
| 11 | CONTROL UNIT |

| 12 | BASEBAND SIGNAL GENERATION UNIT |
|---|---|
| 13 | FREQUENCY COMB GENERATION UNIT |
| 14 | MULTIPLICATION UNIT |
| 15 | MIXER |
| 16 | BPF |
| 17 | AMPLIFICATION UNIT |
| 18, 18-1 to 18-m | TRANSMISSION ANTENNA |
| 19-1 to 19-4, 19-n | RECEPTION ANTENNA |
| 20 | SELECTION UNIT |
| 21 | DELAY UNIT |
| 22, 22-1 to 22-n | AMPLIFICATION UNIT |
| 23, 23-1 to 23-n | MIXER |
| 24, 24-1 to 24-n | MIXER |
| 25, 25-1 to 25-n | LPF |
| 26, 26-1 to 26-n | LPF |
| 29 | RECEPTION SIGNAL PROCESSING UNIT |
| 31 | LPF |
| 32 | LPF |
| 33 | MIXER |
| 34 | MIXER |
| 51 | MODULATION SIGNAL GENERATION UNIT |
| 52 | MODULATION UNIT |
| 121 | PULSE GENERATION UNIT |
| 122 | BPF |
| 123 | PERIODIC VOLTAGE WAVEFORM GENERATION UNIT |
| 124 | VCO |
| 125 | BPF |

**Claims**

1.  A radar device that detects an object, comprising:

    an output circuit that outputs a signal having a plurality of synchronized frequency components;
    a generation circuit that generates a local oscillation signal on the basis of the signal output from the output circuit;
    a transmission circuit that generates a transmission signal on the basis of the local oscillation signal and transmits the transmission signal through a transmission antenna;
    a receiving circuit that receives the transmission signal reflected from the object through a reception antenna, and outputs the signal as a reception signal;
    a detection circuit that executes processing of detecting the object on the basis of a phase of a plurality of frequency components included in the reception signal; and
    a supplying circuit that supplies information on the object which is detected by the detection circuit to the outside.

2.  The radar device according to claim 1,
    wherein the transmission circuit generates the transmission signal by superimposing the same modulation signal on each of the plurality of frequency components included in the local oscillation signal.

3.  The radar device according to claim 1 or 2,
    wherein in the signal that is output from the output circuit and has the plurality of frequency components, the frequency components are arranged in a comb shape with constant intervals,
    the generation circuit generates the local oscillation signal by multiplying or frequency-dividing the signal in which the frequency components are arranged in the comb shape,
    the transmission circuit generates the transmission signal by up-converting the same baseband signal with the local oscillation signal,
    the receiving circuit generates the reception signal by down-converting the reception signal with the local oscillation signal, and
    the detection circuit detects the object on the basis of a plurality of frequency components included in the down-converted signal.

**4.** The radar device according to claim 3,
wherein the detection circuit emphasizes or attenuates the object existing in a predetermined distance on the basis of the down-converted signal.

**5.** The radar device according to claim 3 or 4,
wherein the reception signal includes signals reflected from a plurality of the objects, and the detection circuit detects a phase component that is included in the down-converted signal and corresponds to an object in a predetermined distance among the plurality of objects, and subtracts the detected phase component to attenuate a signal of the object in the predetermined distance.

**6.** The radar device according to claim 3 or 4,
wherein the detection circuit detects an in-phase component included in the down-converted signal, and subtracts the detected in-phase component to attenuate an inflow signal that is directly input to the reception antenna from the transmission antenna so as to detect the object.

**7.** The radar device according to any one of claims 1 to 6,
wherein the transmission circuit generates the transmission signal by modulating the local oscillation signal by amplitude modulation, phase modulation, or a combination of the amplitude modulation and the phase modulation.

**8.** The radar device according to any one of claims 1 to 7,
wherein the output circuit generates a signal having a plurality of synchronized frequency components on the basis of a signal in which a predetermined waveform repeats in a predetermined period.

**9.** The radar device according to any one of claims 1 to 6,
wherein the radar device is mounted on a vehicle, and a travel state of the vehicle is controlled on the basis of information on the object which is supplied from the supplying circuit.

**10.** An object detection method of a radar device that detects an object, comprising:

outputting a signal having a plurality of synchronized frequency components;
generating a local oscillation signal on the basis of the output signal;
generating a transmission signal on the basis of the local oscillation signal and transmitting the transmission signal through a transmission antenna;
receiving the transmission signal reflected from the object through a reception antenna, and outputting the signal as a reception signal;
executing processing of detecting the object on the basis of a phase of a plurality of frequency components included in the reception signal; and
supplying information on the object which is detected to the outside.

**Amended claims under Art. 19.1 PCT**

**1.** (Amended) A radar device that detects an object, comprising:

an output circuit that outputs a signal having a plurality of synchronized frequency components;
a generation circuit that generates a local oscillation signal on the basis of the signal output from the output circuit;
a transmission circuit that generates a transmission signal on the basis of the local oscillation signal and transmits the transmission signal through a transmission antenna;
a receiving circuit that receives the transmission signal reflected from the object through a reception antenna, and outputs the signal as a reception signal;
a detection circuit that executes processing of detecting the object on the basis of a phase of a plurality of frequency components included in the reception signal; and
a supplying circuit that supplies information on the object which is detected by the detection circuit to the outside, wherein the transmission circuit generates the transmission signal by superimposing the same modulation signal on each of the plurality of frequency components included in the local oscillation signal.

**2.** (Canceled)

**3.** (Amended) The radar device according to claim 1,
wherein in the signal that is output from the output circuit and has the plurality of frequency components, the frequency components are arranged in a comb shape with constant intervals,
the generation circuit generates the local oscillation signal by multiplying or frequency-dividing the signal in which the frequency components are arranged in the comb shape,
the transmission circuit generates the transmission signal by up-converting the same baseband signal with the local oscillation signal,
the receiving circuit generates the reception signal by down-converting the reception signal with the local oscillation signal, and
the detection circuit detects the object on the basis of a plurality of frequency components included in the down-converted signal.

**4.** The radar device according to claim 3,
wherein the detection circuit emphasizes or attenuates the object existing in a predetermined distance on the basis of the down-converted signal.

**5.** The radar device according to claim 3 or 4,
wherein the reception signal includes signals reflected from a plurality of the objects, and
the detection circuit detects a phase component that is included in the down-converted signal and corresponds to an object in a predetermined distance among the plurality of objects, and subtracts the detected phase component to attenuate a signal of the object in the predetermined distance.

**6.** The radar device according to claim 3 or 4,
wherein the detection circuit detects an in-phase component included in the down-converted signal, and subtracts the detected in-phase component to attenuate an inflow signal that is directly input to the reception antenna from the transmission antenna so as to detect the object.

**7.** (Amended) The radar device according to any one of claims 1, 3 to 6,
wherein the transmission circuit generates the transmission signal by modulating the local oscillation signal by amplitude modulation, phase modulation, or a combination of the amplitude modulation and the phase modulation.

**8.** (Amended) The radar device according to any one of claims 1, 3 to 7,
wherein the output circuit generates a signal having a plurality of synchronized frequency components on the basis of a signal in which a predetermined waveform repeats in a predetermined period.

**9.** (Amended) The radar device according to any one of claims 1, 3 to 6,
wherein the radar device is mounted on a vehicle, and a travel state of the vehicle is controlled on the basis of information on the object which is supplied from the supplying circuit.

**10.** (Amended) An object detection method of a radar device that detects an object, comprising:

outputting a signal having a plurality of synchronized frequency components;
generating a local oscillation signal on the basis of the output signal;
generating a transmission signal on the basis of the local oscillation signal and transmitting the transmission signal through a transmission antenna;
receiving the transmission signal reflected from the object through a reception antenna, and outputting the signal as a reception signal;
executing processing of detecting the object on the basis of a phase of a plurality of frequency components included in the reception signal; and
supplying information on the object which is detected to the outside,
wherein the transmission signal is generated by superimposing the same modulation signal on each of the plurality of frequency components included in the local oscillation signal.

**Statement under Art. 19.1 PCT**

Contents of amendment

(1) Amendment was made to add the contents of claim 2 to claim 1.

(2) Amendment was made to delete claim 2.

(3) According deletion of claim 2, amendment was made to exclude claim 2 from the dependency of claims 3, and 7 to 9.

(4) Amendment was made to add the contents of claim 2 to claim 10.

Description

Amendment was made to add "the transmission circuit generates the transmission signal by superimposing the same modulation signal on each of the plurality of frequency components included in the local oscillation signal" described in claim 2 to claim 1, and to add "the transmission signal is generated by superimposing the same modulation signal on each of the plurality of frequency components included in the local oscillation signal" to claim 10. According to deletion of claim 2, amendment was made to exclude claim 2 from the dependency of claims 3, and 7 to 9.

# FIG. 1

EP 3 734 326 A1

# FIG. 2

# FIG. 3

COMB SIGNAL

ELECTRIC POWER

FREQUENCY COMB INTERVAL Δf

(B)

FREQUENCY

1 2 5

B P F

1 2 4

1 2 3

PERIODIC VOLTAGE WAVEFORM GENERATION UNIT

VOLTAGE

PERIOD T=1/Δf

(A)

TIME

# FIG. 4

ELECTRIC POWER

Lo.-1    Lo.0    Lo.+1

f-1    f0    f+1    FREQUENCY

# FIG. 5

ELECTRIC
POWER

RF-1     RF0     RF+1

f-1     f0     f+1

FREQUENCY

# FIG. 6

ELECTRIC
POWER

IF0

IF-1     IF+1

IF-2     IF+2

f-1-f+1     f-1-f0     0     f+1-f0     f+1-f-1

FREQUENCY

# FIG. 7

(A)

(B)

# FIG. 8

(A)

(B)

# FIG. 9

# FIG. 10

# FIG. 11

# FIG. 12

## INTERNATIONAL SEARCH REPORT

International application No.

PCT/JP2019/007969

### A. CLASSIFICATION OF SUBJECT MATTER

Int.Cl. G01S13/24(2006.01)i, G01S7/292(2006.01)i

According to International Patent Classification (IPC) or to both national classification and IPC

### B. FIELDS SEARCHED

Minimum documentation searched (classification system followed by classification symbols)

Int.Cl. G01S7/00-G01S7/42, G01S13/00-G01S13/95

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-184393 A (FUJITSU LTD.) 02 July 2004, paragraphs [0013], [0022]-[0049], fig. 1-14 & US 2004/0070532 A1 paragraphs [0009]-[0010], [0053]-[0084], fig. 1-16 & DE 10345565 A1 | 1, 7-8, 10<br>2, 9 |
| Y | JP 2011-107165 A (PANASONIC CORP.) 02 June 2011, paragraphs [0001]-[0003], [0140]-[0160], fig. 8A & US 2009/0015464 A1 paragraphs [0001]-[0003], [0188]-[0208], fig. 8A & WO 2006/106774 A1 & EP 1865337 A1 & CN 101151551 A | 2, 9 |
| A | JP 2015-163890 A (MCEWAN TECHNOLOGIES, LLC) 10 September 2015, entire text, all drawings & US 2010/0214157 A1 & WO 2010/098836 A2 & CA 2752515 A1 & CN 102317809 A & KR 10-2011-0129871 A | 1-10 |

☒ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 May 2019 (14.05.2019) | 28 May 2019 (28.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/007969 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-258133 A (TOYOTA MOTOR CORP.) 05 November 2009, entire text, all drawings (Family: none) | 1-10 |
| A | US 2005/0116855 A1 (KENYON & KENYON) 02 June 2005, entire text, all drawings & GB 2408163 A & DE 10350553 A1 & FR 2861849 A | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015040765 A